# NEUE EUROPÄISCHE PATENTSCHRIFT

(11) **EP 1 113 948 B2**
(45) Veröffentlichungstag und Bekanntmachung des Hinweises auf die Entscheidung über den Einspruch: **18.10.2006**
(45) Hinweis auf die Patenterteilung: 18.06.2003
(21) Anmeldenummer: 99955726.7
(22) Anmeldetag: 14.09.1999
(51) Int. Cl.: B60R 21/20

(54) **LENKRAD MIT AIRBAGMODUL**
STEERING WITH AIRBAG MODULE
VOLANT POURVU D'UN SAC GONFLABLE

(30) Priorität: 16.09.1998 DE 29816923 U
(43) Veröffentlichungstag der Anmeldung: 11.07.2001
(73) Patentinhaber: Takata-Petri AG, 63743 Aschaffenburg (DE)
(72) Erfinder: LAUE, Andreas, D-63820 Elsenfeld (DE); BLATTNER, Joachim, D-63857 Waldaschaff (DE); SCHNABEL, Wilhelm, D-63843 Niedernberg (DE)
(74) Vertreter: Baumgärtel, Gunnar
(86) Internationale Anmeldenummer: PCT/DE1999/002973
(87) Internationale Veröffentlichungsnummer: WO 2000/015470

(56) Entgegenhaltungen:
- EP-A- 0 560 355
- EP-A- 0 994 793
- EP-A- 1 026 050
- DE-A- 3 710 173
- DE-A- 3 925 761
- DE-A- 19 731 314
- DE-A- 19 743 615
- DE-U- 29 816 923
- DE-U- 29 902 033
- GB-A- 2 270 045
- GB-A- 2 292 353
- JP-A- 740 837
- JP-A- 4 143 143
- US-A- 5 354 093
- US-A- 5 782 481

## Beschreibung

Die Erfindung betrifft eine Lenkrad mit Airbagmodul nach dem Oberbegriff des Anspruchs 1. Ein derartiges Lenkrad mit Airbagmodul ist aus der JP-A-4 143 143 bekannt. Ferner bertrifft die Erfindung ein Lenkrad mit Anlagmodul, wie aus der DE-U-299 02 033 bekannt.

Bei Kraftfahrzeuglenkrädem besteht aufgrund der starren Kopplung zur Lenksäule das Problem, daß zumindest in bestimmten Geschwindigkeitsbereichen am Lenkrad Vibrationen auftreten. Diese werden durch die Eigenfrequenz des Airbag-Lenkrades in Abhängigkeit zu einer bestimmten Motor-Drehzahl verursacht. Neben der Verschiebung der Eigenfrequenz des Air-bag-Lenkrades durch Anbringen einer Zusatzmasse am Lenkrad in einen Frequenzbereich, der außerhalb des Bereichs der tatsächlich auftretenden Schwingungen am Lenkrad liegt, ist zur Verringerung dieser Vibrationen z. B. aus der DE 37 10 173 A1 bekannt, das Gehäuse der Airbageinheit auf dem Lenkrad in der Weise gedämpft schwingend zu lagern, daß es gegenüber dem Lenkrad quer zur Längsachse der Lenksäule relativ bewegbar ist. Zusätzlich ist vorgesehen, daß das Gehäuse auch in Richtung der Längsachse der Lenksäule bewegbar ist. Erreicht wird die Bewegbarkeit dadurch, daß an den Seiten des Gehäuses Haltebügel angeordnet sind, die in entsprechenden Bohrungen Lagerbuchsen aufweisen, die geräuschdämpfende Eigenschaften haben. Durch die Lagerbuchsen sind Halteschrauben für die Befestigung der Haltebügel an den Speichen des Lenkrades geführt. Dabei ist zwischen dem Schaft jeder Halteschraube und der jeweiligen Buchse ein Freiraum vorhanden, der eine seitliche Verschiebung der Haltebügel gegenüber den Halteschrauben ermöglicht. Somit wird eine schwimmende Lagerung erzielt. Dabei ist das gesamte Airbagmodul einschließlich der Kappe, die es gegenüber dem Fahrgastraum abschirmt, schwimmend gelagert.

Der Nachteil dieser Anordnung besteht darin, daß beim Auftreten von Vibrationen am Lenkrad, diese Vibrationen u.a. durch die Relativbewegung der Kappe gegenüber dem Lenkrad sichtbar sind. Denn während das Lenkrad infolge der starren Kopplung mit der Lenkspindel schwingt, treten an der Kappe keine oder stark verringerte Vibrationen auf. Deshalb muß zwischen der Kappe und dem Lenkrad ein relativ großer Spalt vorhanden sein, um die gegenseitige Reibung und damit lästige Geräusche beim Auftreten von Vibrationen zu vermeiden.

Weiterhin ist aus der Schrift DE 39 25 761 A1 eine Vibrationsunterdrückungseinrichtung für ein Lenkrad mit Airbagmodul bekannt. Bei dieser ist ein Gehäuse zur Aufnahme des Gassacks starr an dem Lenkradkörper angebracht und der Gasgenerator ist durch mehrere elastische Mittel an dem Gehäuse angebracht. Als elastische Mittel sind elastische Buchsen vorgesehen, die mittels Nieten gehalten werden.

Der Nachteil dieser Anordnung besteht darin, daß nach Zündung des Gasgenerators nicht nur Gas in den Gassack sondern auch in die entgegengesetzte Richtung aus dem Lenkrad strömen kann, so daß der Druck im Gassack und damit auch der Druck für die Öffnung der Abdeckkappe verringert wird.

Der Erfindung liegt die Aufgabe zugrunde, Schwingungen am Lenkrad weitestgehend zu tilgen und einen verbesserten Kappenöffnungsdruck zu erzielen.

Erfindungsgemäß wird das gemäß den Merkmalen des Anspruchs 1 bzw. 2 erreicht.

Dadurch besteht der Vorteil, daß trotz einer an der Lenkradoberseite vom Lenkrad getrennt verlaufenden Abdeckkappe wegen der Schwingungstilgung zwischen beiden eine Relativbewegung zumindest verringert wird. Durch die umlaufende Lagerung des Gasgenerators wird gleichzeitig eine Dichtfunktiion erzielt. Bei der Ausführung mit Dichtlippe liegt diese im Ruhezustand nicht Gasgenerator oder an einem mit diesem verbundenen Bauteil an, um die Funktion des Gasgenerators als Schwingungstilger nicht zu beeinflussen. Erst nach Zündung des Gasgenerators legt sich die Dichtlippe an, so daß sich ein erhöhter Druck für die Öffnung der Abdeckkappe einstellt, da das Abströmen von Gas entgegen der Entfaltungsrichtung des Gassacks verhindert wird.

Das elastisch verformbare Element ist zweckmäßig durch mindestens ein zusätzliches Bauteil mit dem Airbagmodul verbunden.

Das zusätzliche Bauteil kann zum Beispiel aus Kunststoff oder Blech bestehen.

Das elastisch verformbare Element ist in einer Ausführungsform innerhalb des Airbagmoduls durch Blechteile des Airbagmoduls fixiert ist. In einer weiteren Ausgestaltung ist vorgesehen, daß der Gassack, ein Diffusor und die Abdeckkappe an mindestens einem der Blechteile befestigt sind. Durch den Diffusor wird u. a. auch der Kontakt zwischen dem Gassack und dem Gasgenerator verhindert, so daß sich dessen Schwingungen nicht auf den Gassack übertragen können.

In einer Ausführungsform ist mindestens ein erstes Blechteil mit dem Lenkrad verbunden und dieses Blechteil weist eine Vertiefung auf, in die ein Seitenrand der Abdeckkappe eingreift. Weiterhin ist mindestens ein zweites Blechteil über diesen Seitenrand mit dem ersten Blechteil verbunden.

Die Befestigung des Gasgenerators erfolgt zweckmäßig so, daß ein Flansch des Gasgenerators in das elastisch verformbare Element eingreift.

In einer weiteren Ausführungsform ist vorgesehen, daß der Gassack zusammen mit einem Diffusor am Airbagmodul befestigt ist.

Das elastisch verformbare Element weist in einer Ausführungsform mindestens einen nach unten weisenden Zapfen auf. Dieser erleichtert die Positionierung des Gasgenerators und unterstützt die Schwingungstilgerfunktion des Gasgenerators. Um eine einfache Montage der Zapfen zu erzielen, sind diese zweckmäßig mit einer Einführschräge versehen.

Für die Aufnahme des Flansches des Gasgenerators ist am elastisch verformbaren Element vorzugsweise eine Nut vorgesehen, wobei der Nutgrund nach außen gewölbt ist und die Nutseitenflächen ausgehend von diesem divergierend verlaufen.

Vorzugsweise ist als elastisch verformbares Element ein Schwingungselement aus Gummi vorgesehen.

Weiterhin ist in einer Ausführung gemäß Anspruch 17 neben der elastischen Lagerung des Gasgenerators das Airbagmodul insgesamt zusätzlich federnd gelagert, so daß eine Floating Horn Einrichtung vorgesehen werden kann, bei der also durch Niederdrücken der Abdeckkappe oder einer ihrer Bereiche die Hupenkontakte geschlossen werden können.

Vorzugsweise ist als Gasgenerator ein topfförmiger Gasgenerator vorgesehen.

Die Erfindung soll in Ausführungsbeispielen anhand von Zeichnungen erläutert werden. Es zeigen:
- Fig. 1: einen Querschnitt durch eine erste Ausführungsform eines Airbagmoduls;
- Fig. 2: einen Querschnitt durch ein Lenkrad mit einer zweiten Ausführungsform des Airbagmoduls;
- Fig. 3: einen Schnitt durch eine Ausführungsform eines elastischen Elementes;
- Fig. 4: einen Querschnitt durch ein Airbagmodul mit elastischen Elementen nach Fig. 3;
- Fig. 5: einen Querschnitt durch ein Lenkrad mit lenkradintegrierter Abdeckung.

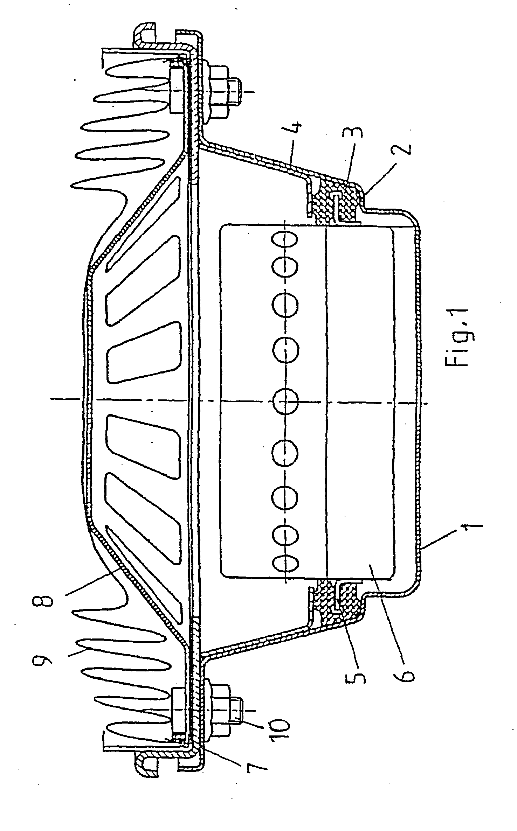

Das in der Fig. 1 dargestellte Airbagmodul weist ein Gehäuse 1 auf, das sich nach oben stufenförmig erweitert und das in an sich bekannter Weise fest mit dem Lenkrad verbunden ist (nicht dargestellt). Auf einem unteren waagerechten Abschnitt 2 des Gehäuses 1 liegt als Schwingungselement ein Gummiring 3 auf, dem an seiner Oberseite ein umlaufendes Halteelement 4 aus Blech zugeordnet ist. Mittels dieses Halteelements wird der Gummiring 3 gegen den waagerechten Abschnitt 2 gedrückt und so fixiert.

Der Gummiring 3 weist einen Schlitz auf, in den ein Flansch 5 eines Gasgenerators 6 eingreift, der auf diese Weise schwingend gelagert ist. Wenn das Gehäuse 1 zusammen mit dem Lenkrad schwingt, wirkt der Gasgenerator wegen der schwingenden Lagerung als Schwingungstilger. Dadurch wird die Schwingungsamplitude des Lenkrades verringert.

Auf einem oberen waagerechten Abschnitt 7 des Gehäuses 1 sind ein Diffusor 8 und ein Gassack 9 mittels Schrauben 10 befestigt. Auch eine nicht dargestellte Abdeckkappe ist mit dem Gehäuse 1 verbunden, so daß zwischen dem Diffusor 8, dem Gassack 9 und der Abdeckkappe keine Relativbewegung stattfindet. Da das Gehäuse 1 fest mit dem Lenkrad verbunden ist, findet auch keine Relativbewegung zwischen der Abdeckkappe und dem Lenkrad statt.

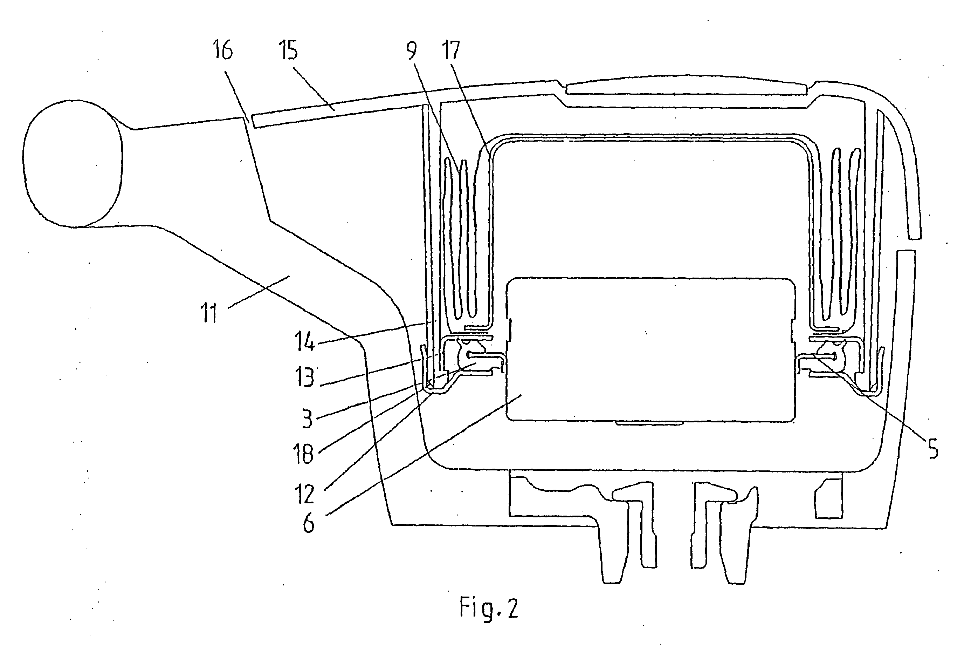

In der Fig. 2 ist ein Lenkrad 11 dargestellt, bei dem der elastische Gummiring 3 zwischen ringförmigen Blechteilen 12, 13 fixiert ist. Das Blechteil 12 ist direkt oder über weitere Bauteile fest mit dem Lenkrad 11 verbunden (nicht dargestellt). Zwischen den Blechteilen 12, 13 ist ist ein Seitenrand 14 einer Abdeckkappe 15 fixiert, der in eine Vertiefung 18 eingreift. Damit ist die Abdeckkappe 15 im unteren Bereich fest mit dem Lenkrad 11 verbunden. An der Lenkradoberseite besteht dagegen keine Verbindung zum Lenkrad, sondem zwischen dem Lenkrad 11 und der Abdeckkappe 15 ist ein Spalt 16 vorgesehen. Wegen der festen Verbindung der Abdeckkappe 15 mittels des Seitenrandes 14 am Lenkrad 11 kann keine Relativbewegung zwischen diesem und der Abdeckkappe 15 stattfinden, so daß der Spalt 16 klein sein kann. Ein Diffusor 17 ist am Blechteil 13 zusammen mit dem Gassack 9 befestigt. Da das Blechteil 13 über den Seitenrand 14 fest mit dem Blechteil 12 verbunden ist, sind somit auch der Diffusor 17 und der Gassack 9 fest mit dem Lenkrad verbunden. Damit kann keine Relativbewegung zwischen dem Gassack 9 und der Abdeckkappe 15 stattfinden, so daß keine deutliche Trennung dieser beiden Bauteile erfolgen muß.

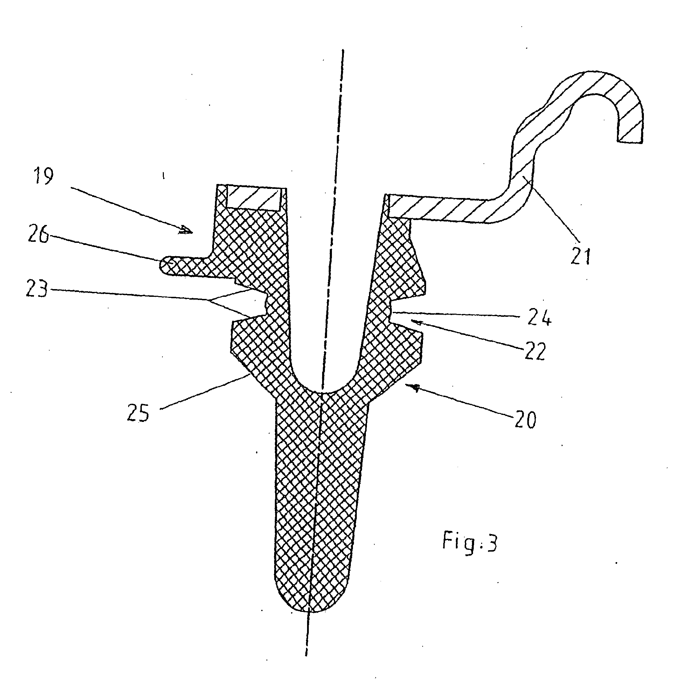

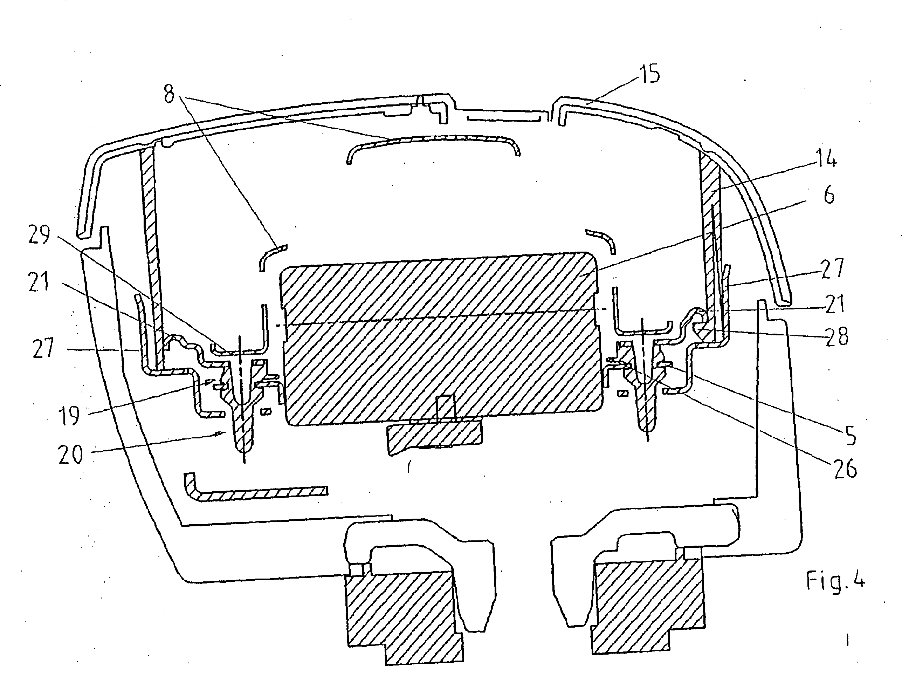

In der Fig. 3 ist ein umlaufendes elastisch verformbares Element 19 dargestellt, das in vorbestimmten Winkelabständen Zapfen 20 aufweist. Das elastisch verformbare Element 19 besteht vorzugsweise aus Gummi und ist an einem ringförmigen Bauteil 21, z. B. aus Blech, befestigt, das mit dem Airbagmodul fest verbunden ist (nicht dargestellt). Jeder Zapfen 20 ist mit einer umlaufenden Nut 22 für die Aufnahme des Flansches 5 des Gasgenerators 6 versehen (Fig. 4). Um funktionsstörende Reibung zwischen dem Flansch 5 und dem Zapfen 20 zu vermeiden, verlaufen die seitlichen Nutflächen 23 ausgehend vom Nutgrund 24 divergierend. Als Schutz des Zapfens vor den Blechkanten des Flansches 5 ist der Nutgrund 24 nach außen gewölbt ausgeführt. Zur einfachen Montage ist an dem Zapfen eine Einführschräge 25 vorgesehen.

Das elastische Element 19 weist eine umlaufende Dichtlippe 26 auf, die oberhalb des Flansches 5 liegt. Wie aus der Fig. 4 ersichtlich ist, liegt die Dichtlippe im Ruhezustand aber nicht am Flansch 5 an, so daß die Funktion des Gasgenerators 6 als Schwingungstilger nicht beeinflußt wird. Die Dichtlippe legt sich aber nach Zündung des Gasgenerators 6 an den Flansch 5 an, so daß der Raum, der durch das Gas des Gasgenerators gefüllt wird, d.h., der Raum neben und über dem Gasgenerator, gegen das Umfeld abgedichtet wird. Diese Abdichtung gewährleistet den notwendigen Druck für die Öffnung der Abdeckkappe 15.

Das Blechteil 21 ist mit einem Blechteil 27 des Airbagmoduls direkt oder unter Zwischenlage weiterer Teile fest verbunden (nicht dargestellt). Die Abdeckkappe 15 ist über ihre Seitenwand 14 dadurch fest mit dem Airbagmodul verbunden, daß ein unteres hakenförmiges Ende 28 unter das Blechteil 21 greift und daß die Seitenwand 14 seitlich am Blechteil 27 anliegt.

Der in der Fig. 4 nicht dargestellte Gassack ist zwischen dem Blechteil 21 und einem umlaufenden Gassackhalteteil 29 befestigt und erstreckt sich im gefalteten Zustand hauptsächlich neben dem Diffusor 8, wie es in Fig. 1 dargestellt ist.

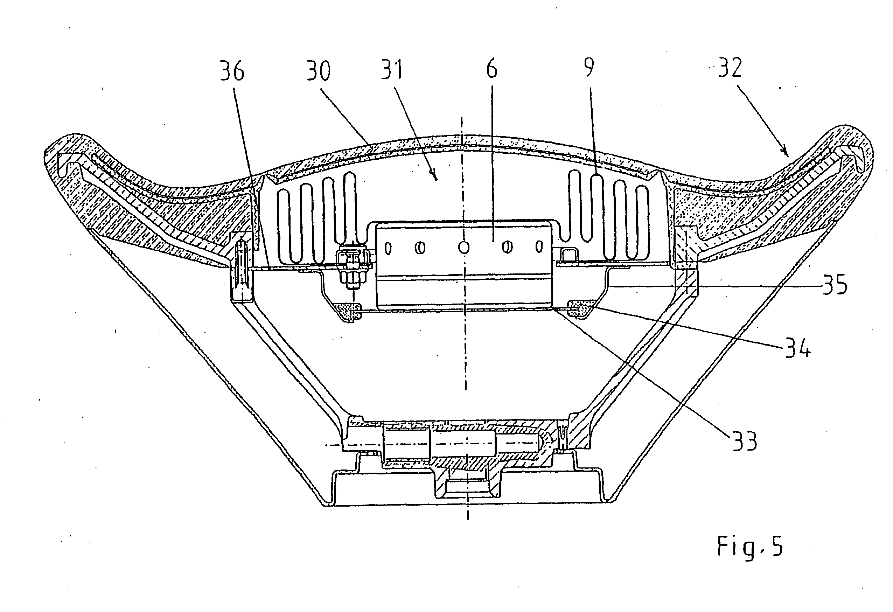

Bei der Anordnung der Fig. 5, die kein Ausführungsbeispiel der Erfindung darstellt, ist eine Abdeckkappe 30 eines Airbagmoduls 31 integrierter Bestandteil eines Lenkrades 32. Bei dieser Ausführungsform ist der Gasgenerator 6 mit einem Trägerteil 33 verbunden, das in einem ringförmigen elastischen Element 34, z.B. aus Gummi, geführt ist. Das elastische Element 34 ist über ein ringförmiges Zwischenteil 35, das z.B. aus Blech gefertigt sein kann, mit einem Boden 36 des Airbagmoduls 31 fest verbunden. Das umlaufende elastische Element 34 und das Trägerteil 33 gewährleisten, daß nach Zündung des Gasgenerators 6 kein Gas entgegen der Entfaltungsrichtung des Gassacks 9 entweichen kann. Weiterhin gewährleistet diese Anordnung auch die Schwingungstilgerfunktion des Gasgenerators, da dieser nur im elastischen Element 34 geführt ist und keine Verbindung zum Boden 36 besteht.

## Patentansprüche

1. Lenkrad mit einem Airbagmodul, das einen Gasgenerator (6) und einen Gassack (9) aufweist und durch eine an der Lenkradoberseite vorgesehene Abdeckkappe (15) zum Fahrgastraum hin abgedeckt ist, wobei der Gasgenerator (6) als Schwingungstilger vorgesehen ist, indem er in mindestens einem bei Schwingungen des Lenkrades elastisch verformbaren Element (3, 19) im Airbagmodul gelagert ist, wobei der Gasgenerator (6) umlaufend in dem elastisch verformbaren Element (3) gelagert ist,
**dadurch gekennzeichnet,**
**dass** die Abdeckkappe (15) an der Lenkradoberseite getrennt vom Lenkrad verläuft, so dass zwischen dem Lenkrad (11) und der Abdeckkappe (15) ein Spalt (16) vorgesehen ist dass das Airbagmodul fest mit dem Lenkrad (11) verbunden ist, wobei der Gassack (9) und die Abdeckkappe (15) getrennt vom Gasgenerator (6) fest mit dem Airbagmodul verbunden sind, so dass keine Relativbewegung zwischen dem Lenkrad (11) und der Abdeckkappe (15) stattfindet.

2. Lenkrad mit einem Airbagmodul, das einen Gasgenerator (6) und einen Gassack (9) aufweist und durch eine an der Lenkradoberseite vorgesehene Abdeckkappe (15) zum Fahrgastraum hin abgedeckt ist, wobei der Gasgenerator (6) als Schwingungstilger vorgesehen ist, indem er in mindestens einem bei Schwingungen des Lenkrades elastisch verformbaren Element (3, 19) im Airbagmodul gelagert ist, und wobei der Gasgenerator (6) einen Flansch (5) aufweist, der in das elastich verformbare Element (13) eingreift, insebondere nach Anspruch 1,
**dadurch gekennzeichnet,**
**dass** das elastisch verformbare Element (19) eine sich im Bereich des Flansches (5) etwa parallel zu diesem erstreckende umlaufende Dichtlippe (26) aufweist, die erst nach Zündung des Gasgenerators an dem Flansch (5) anliegt und sich im Bereich des Flansches (5) etwa parallel zu diesem erstreckende.

3. Lenkrad nach Anspruch 1 oder 2, **dadurch gekennzeichnet, daß** das elastisch verformbare Element (3, 34) durch mindestens ein zusätzliches Bauteil (12, 13, 35) mit dem Airbagmodul (31) verbunden ist.

4. Lenkrad nach mindestens einem der vorhergehenden Ansprüche, **dadurch gekennzeichnet, daß** das zusätzliche Bauteil (12, 13, 35) aus Kunststoff besteht.

5. Lenkrad nach mindestens einem der vorhergehenden Anspruche, **dadurch gekennzeichnet, daß** das elastisch verformbare Element (3) innerhalb des Airbagmoduls durch Blechteile (12, 13) des Airbagmoduls fixiert ist.

6. Lenkrad nach Anspruch 5, **dadurch gekennzeichnet, daß** der Gassack (9), ein Diffusor (17) und die Abdeckkappe (15) an mindestens einem der Blechteile (12, 13) befestigt sind.

7. Lenkrad nach Anspruch 5 oder 6, **dadurch gekennzeichnet, daß** mindestens ein erstes Blechteil (12) mit dem Lenkrad (11) verbunden ist und eine Vertiefung aufweist, in die ein Seitenrand (14) der Abdeckkappe (15) eingreift, und daß mindestens ein zweites Blechteil (13) über diesen Seitenrand (14) mit dem ersten Blechteil (12) verbunden ist.

8. Lenkrad nach mindestens einem der vorhergehenden Ansprüche, **dadurch gekennzeichnet, daß** der Gasgenerator (6) einen Flansch (5) aufweist, der in das elastisch verformbare Element (3) eingreift.

9. Lenkrad nach mindestens einem der vorhergehenden Ansprüche, **dadurch gekennzeichnet, daß** der Gassack (9) zusammen mit einem Diffusor (8) an einem Gehäuse (1) des Airbagmoduls befestigt ist.

10. Lenkrad nach Anspruch 8 oder 9, **dadurch gekennzeichnet, daß** das elastisch verformbare Element (19) eine sich im Bereich des Flansches (5) etwa parallel zu diesem erstreckende umlaufende Dichtlippe (26) aufweist.

11. Lenkrad nach mindestens einem der vorhergehenden Ansprüche, **dadurch gekennzeichnet, daß** das elastisch verformbare Element (19) mindestens einen nach unten weisenden Zapfen (20) aufweist.

12. Lenkrad nach Anspruch 11, **dadurch gekennzeichnet, daß** der Zapfen (20) mit einer Einführschräge (25) versehen ist.

13. Lenkrad nach Anspruch 11 oder 12, **dadurch gekennzeichnet, daß** das elastisch verformbare Element (19) im Bereich der Zapfen (20) eine Nut (22) für die Aufnahme des Flansches (5) aufweist, wobei der Nutgrund (24) nach außen gewölbt ist und die Nutseitenflächen (23) ausgehend vom Nutgrund (24) divergierend verlaufen.

14. Lenkrad nach mindestens einem der vorhergehenden Ansprüche, **dadurch gekennzeichnet, daß** als elastisch verformbares Element ein Schwingungselement (3, 19, 34) aus Gummi vorgesehen ist.

15. Lenkrad nach mindestens einem der Ansprüche 1 bis 14, **dadurch gekennzeichnet, daß** eine vom Lenkrad getrennt verlaufende Abdeckkappe (15) vorgesehen ist.

16. Lenkrad nach Anspruch 2, soweit nicht rückbezogen auf Anspruch 1 , **dadurch gekennzeichnet, daß** das Airbagmodul (31) insgesamt zusätzlich federnd gelagert ist.

17. Lenkrad nach mindestens einem der vorhergehenden Ansprüche, **dadurch gekennzeichnet, daß** ein topfförmiger Gasgenerator (6) vorgesehen ist.

## Claims

1. Steering wheel having an air-bag module which has a gas generator (6) and an air bag (9) and is covered with respect to the passenger compartment by means of a covering cap (15) provided on the upper side of the steering wheel, the gas generator (6) being provided as an oscillation damper by being mounted in the air-bag module in at least one element (3, 19) which is elastically deformable when the steering wheel oscillates, the gas generator (6) being peripherally mounted in the elastically deformable element (3), **characterized in that** the covering cap (15) on the upper side of the steering wheel runs separately from the steering wheel, so that a gap (16) is provided between the steering wheel (11) and the covering cap (15), and **in that** the air-bag module is connected fixedly to the steering wheel (11), the air bag (9) and the covering cap (15) being connected fixedly to the air-bag module separately from the gas generator (6), so that no relative movement takes place between the steering wheel (11) and the covering cap (15).

2. Steering wheel having an air-bag module which has a gas generator (6) and an air bag (9) and is covered with respect to the passenger compartment by means of a covering cap (15) provided on the upper side of the steering wheel, the gas generator (6) being provided as an oscillation damper by being mounted in the air-bag module in at least one element (3, 19) which is elastically deformable when the steering wheel oscillates, and the gas generator (6) having a flange (5) which engages in the elastically deformable element (13), in particular according to Claim 1, **characterized in that** the elastically deformable element (19) has a peripheral sealing lip (26) which extends approximately parallel to the flange (5) in the region thereof and bears against the flange (5) only after the gas generator is ignited.

3. Steering wheel according to Claim 1 or 2,
**characterized in that** the elastically deformable element (3, 34) is connected to the air-bag module (31) by means of at least one additional component (12, 13, 35).

4. Steering wheel according to at least one of the preceding claims, **characterized in that** the additional component (12, 13, 35) consists of plastic.

5. Steering wheel according to at least one of the preceding claims, **characterized in that** the elastically deformable element (3) is fixed within the air-bag module by sheet-metal parts (12, 13) of the air-bag module.

6. Steering wheel according to Claim 5, **characterized in that** the air bag (9), a diffuser (17) and the covering cap (15) are fastened to at least one of the sheet-metal parts (12, 13).

7. Steering wheel according to Claim 5 or 6, **characterized in that** at least one first sheet-metal part (12) is connected to the steering wheel (11) and has a depression in which a side edge (14) of the covering cap (15) engages, and **in that** at least one second sheet-metal part (13) is connected to the first sheet-metal part (12) via this side edge (14).

8. Steering wheel according to at least one of the preceding claims, **characterized in that** the gas generator (6) has a flange (5) which engages in the elastically deformable element (3).

9. Steering wheel according to at least one of the preceding claims, **characterized in that** the air bag (9) is fastened together with a diffuser (8) to a housing (1) of the air-bag module.

10. Steering wheel according to Claim 8 or 9, **characterized in that** the elastically deformable element (19) has a peripheral sealing lip (26) extending in the region of the flange (5) approximately parallel thereto.

11. Steering wheel according to at least one of the preceding claims, **characterized in that** the elastically deformable element (19) has at least one downwardly pointing peg (20).

12. Steering wheel according to Claim 11, **characterized in that** the peg (20) is provided with an introducing bevel (25).

13. Steering wheel according to Claim 11 or 12, **characterized in that** the elastically deformable element (19) has, in the region of the peg (20), a groove (22) for receiving the flange (5), the groove bottom (24) being curved outwards and the groove side surfaces (23) diverging from the groove bottom (24).

14. Steering wheel according to at least one of the preceding claims, **characterized in that** an oscillating element (3, 19, 34) made of rubber is provided as the elastically deformable element.

15. Steering wheel according to at least one of Claims 1 to 13, **characterized in that** a covering cap (15) which moves separately from the steering wheel is provided.

16. Steering wheel according to Claim 2, unless referred back to Claim 1, **characterized in that** the air-bag module (31) as a whole is additionally spring-mounted.

17. Steering wheel according to at least one of the preceding claims, **characterized in that** a cup-shaped gas generator (6) is provided.

## Revendications

1. Volant de direction comportant un module de sac gonflable qui comporte un générateur de gaz (6) et un sac de gaz (9) et qui est recouvert par une enveloppe de revêtement (15) prévue sur le côté supérieur du volant de direction en direction de l'habitacle, dans lequel le générateur de gaz (6) est prévu en tant qu'amortisseur de vibrations, en étant logé dans au moins un élément élastiquement déformable (3, 19), lors de vibrations du volant de direction, dans le module de sac gonflable, le générateur de gaz (6) étant logé de façon périphérique dans l'élément élastiquement déformable (3),
**caractérisé en ce que** l'enveloppe de revêtement (15) s'étend de façon séparée du volant de direction sur le côté supérieur du volant de direction, de sorte qu'entre le volant de direction (11) et l'enveloppe de revêtement (15), est prévue une fente (16), **en ce que** le module de sac gonflable est relié solidement au volant de direction (11), le sac de gaz (9) et l'enveloppe de revêtement (15) étant raccordés, séparément du générateur de gaz (6), solidement avec le module de sac gonflable, de sorte qu'aucun mouvement relatif ne se produit entre le volant de direction (11) et l'enveloppe de revêtement (15).

2. Volant de direction comportant un module de sac gonflable qui comporte un générateur de gaz (6) et un sac de gaz (9) et qui est recouvert par une enveloppe de revêtement (15) prévue sur le côté supérieur du volant de direction en direction de l'habitacle, dans lequel le générateur de gaz (6) est prévu en tant qu'amortisseur de vibrations, en étant logé dans au moins un élément élastiquement déformable (3, 19), lors de vibrations du volant de direction, dans le module de sac gonflable, et le générateur de gaz (6) présentant une collerette (5) qui est en prise dans l'élément élastiquement déformable (13), en particulier selon la revendication 1, **caractérisé en ce que** l'élément élastiquement déformable (19) comporte une lèvre d'étanchéité (26) périphérique s'étendant dans la région de la collerette (5) sensiblement parallèle à celle-ci et qui ne vient en appui contre la collerette (5) qu'après allumage du générateur de gaz.

3. Volant de direction selon la revendication 1 ou 2, **caractérisé en ce que** l'élément élastiquement déformable (3, 34) est relié au module de sac gonflable (31) par au moins un composant (12, 13, 35) supplémentaire.

4. Volant de direction selon au moins l'une des revendications précédentes, **caractérisé en ce que** le composant (12, 13, 35) supplémentaire est en matière synthétique.

5. Volant de direction selon au moins l'une des revendications précédentes, **caractérisé en ce que** l'élément élastiquement déformable (3) est fixé à l'intérieur du module de sac gonflable par des pièces en tôle (12, 13) du module de sac gonflable.

6. Volant de direction selon la revendication 5, **caractérisé en ce que** le sac à gaz (9), un diffuseur (17) et l'enveloppe de revêtement (15) sont fixés à au moins l'une des pièces en tôle (12, 13).

7. Volant de direction selon la revendication 5 ou 6, **caractérisé en ce qu'**au moins une première pièce en tôle (12) est reliée au volant de direction (11) et présente un renfoncement dans lequel un bord latéral (14) de l'enveloppe de revêtement (15) est en prise et qu'au moins une deuxième pièce en tôle (13) est reliée à la première pièce en tôle (12) par l'intermédiaire de ce bord latéral (14).

8. Volant de direction selon au moins l'une des revendications précédentes, **caractérisé en ce que** le générateur de gaz (6) présente une collerette (5) qui est en prise dans l'élément élastiquement déformable (3).

9. Volant de direction selon au moins l'une des revendications précédentes, **caractérisé en ce que** le sac à gaz (9) conjointement avec un diffuseur (17) est fixé à un boîtier (1) du module de sac gonflable.

10. Volant de direction selon la revendication 8 ou 9, **caractérisé en ce que** l'élément élastiquement déformable (19) présente une lèvre d'étanchéité (26) périphérique qui s'étend dans la région de la collerette (5) sensiblement parallèle à celui-ci.

11. Volant de direction selon au moins l'une des revendications précédentes, **caractérisé en ce que** l'élément élastique déformable (19) présente au moins une cheville (20) dirigée vers le bas.

12. Volant de direction selon la revendication 11, **caractérisé en ce que** la cheville (20) est munie d'un biseau d'insertion (25).

13. Volant de direction selon la revendication 11 ou 12, **caractérisé en ce que** l'élément élastiquement déformable (19) présente dans la zone de la cheville (20) une rainure (22) pour loger la collerette (5), le fond de rainure (24) étant recourbé vers l'extérieur et les surfaces latérales de rainure (23) s'étendant en divergeant à partir du fond de rainure (24).

14. Volant de direction selon au moins l'une des revendications précédentes, **caractérisé en ce que** l'on prévoit un élément d'oscillation (3, 19, 34) en caoutchouc en tant qu'élément élastiquement déformable.

15. Volant de direction selon au moins l'une des revendications 1 à 13, **caractérisé en ce que** l'on prévoit une enveloppe de revêtement (15) qui s'étend en étant séparée du volant.

16. Volant de direction selon la revendication 2 lorsqu'elle ne dépend pas de la revendication 1, **caractérisé en ce que** le module de sac gonflable (31) dans son ensemble est de plus logé élastiquement.

17. Volant de direction selon au moins l'une des revendications précédentes, **caractérisé en ce que** l'on prévoit un générateur de gaz (6) en forme de creuset.
